Europäisches Patentamt

European Patent Office

Office européen des brevets

(11) Veröffentlichungsnummer : **0 067 966**
**B1**

(12) # EUROPÄISCHE PATENTSCHRIFT

(45) Veröffentlichungstag der Patentschrift :
28.11.84

(51) Int. Cl.³ : **B 29 H   7/14**

(21) Anmeldenummer : **82104401.3**

(22) Anmeldetag : **19.05.82**

(54) **Verfahren und Vorrichtung zur Herstellung von Schläuchen aus einer vulkanisierbaren Kautschukmischung.**

(30) Priorität : **22.05.81 DE 3120518**

(43) Veröffentlichungstag der Anmeldung :
**29.12.82 Patentblatt 82/52**

(45) Bekanntmachung des Hinweises auf die Patenterteilung : **28.11.84 Patentblatt 84/48**

(84) Benannte Vertragsstaaten :
**DE FR GB IT**

(56) Entgegenhaltungen :
**AT-B-   239 515**
**DE-A- 2 608 948**
**DE-B- 2 545 058**
**US-A- 3 270 117**

(73) Patentinhaber : **METZELER KAUTSCHUK GMBH**
**Gneisenaustrasse 15**
**D-8000 München 50 (DE)**

(72) Erfinder : **Härtel, Volker, Dr.**
**Fichtenstrasse 50**
**D-8034 Germering (DE)**

(74) Vertreter : **Michells, Theodor, Dipl.-Ing.**
**Gneisenaustrasse 15**
**D-8000 München 50 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Vorrichtung zur Herstellung von dorngeheizten Schläuchen aus einer vulkanisierbaren Kautschukmischung.

Dorngeheizte gerade Schläuche werden in großen Mengen als Halbzeuge für die Herstellung von geschliffenen oder ungeschliffenen Schlauchringen, von Walzenüberzügen oder ähnlichen technischen Artikeln benötigt.

Solche Schläuche können diskontinuierlich hergestellt werden, indem von einer Spritzmaschine ein Schlauch extrudiert wird ; dieser Schlauch wird mittels Preßluft auf einen Metalldorn aufgezogen, dessen Außendurchmesser dem Innendurchmesser des fertig vulkanisierten Schlauches entspricht. Anschließend werden die auf die Dorne aufgezogenen Schläuche in Heizkesseln oder Autoklaven mit Heizzeiten zwischen 15 und 45 Minuten ausvulkanisiert. Die Heizzeit hängt dabei wesentlich von der Wandstärke des Schlauches und dem Kesseldruck ab.

Um das aufwendige Aufziehen der extrudierten Schläuche auf die Dorne einzusparen, ist aus der DE-B2-2 545 085 ein Verfahren zur Herstellung von dorngeheizten Schläuchen der angegebenen Gattung sowie eine Vorrichtung zur Durchführung eines solchen Verfahrens bekannt, bei denen Extruder mit Querspritzköpfen verwendet werden ; dabei wird der Schlauch direkt auf den Dorn aufgespritzt, der dem Querspritzkopf in senkrechter Lage von oben zugeführt wird und nach dem Aufspritzen des Schlauches nach unten aus dem Querspritzkopf austritt. Die so hergestellten Schläuche werden anschließend in die einzelnen Schlauchstücke zerschnitten. Anschließend durchlaufen die Schlauchstücke mit den Dornen eine Vulkanisationsanlage, in der sie erwärmt und dadurch die Kautschukmischung zu Gummi vernetzt wird.

Ein ähnliches Verfahren ist aus der DE-A-2 608 948 bekannt, wobei jedoch als Material für die Schläuche keine Kautschukmischung, sondern ein Thermoplast verwendet wird, so daß es keine Probleme mit der anschließenden Vulkanisation der Schlauchstücke gibt.

Aus einer Kautschukmischung hergestellte Schläuche müssen jedoch in einer gesonderten Vulkanisationsanlage ausvulkanisiert werden, wozu die Schlauchstücke relativ lange auf einer hohen Temperatur gehalten werden müssen : wegen der langen Aufenthaltsdauer der Dorne mit den Schlauchstücken in der Vulkanisationsanlage ist eine große Zahl solcher Dorne erforderlich, was unter anderem einen erheblichen Kostenfaktor darstellt.

Der Erfindung liegt deshalb die Aufgabe zu Grunde, ein Verfahren und eine Vorrichtung zur Herstellung von dorngeheizten Schläuchen aus einer vulkanisierbaren Kautschukmischung der angegebenen Gattung zu schaffen, bei der eine gesonderte Vulkanisationsanlage, die die Schlauchstücke nach dem Aufspritzen auf die Dorne vernetzt, entfallen kann und gleichzeitig die Vulkanisation selbst erheblich beschleunigt wird, wodurch sich auch die Zahl der im Umlauf befindlichen Dorne verringern läßt.

Bei einem Verfahren der angegebenen Gattung wird dies dadurch erreicht, daß die Dorne vor der Umspritzung mindestens auf die Vulkanisationstemperatur der Kautschukmischung aufgeheizt werden.

Bei einer Vorrichtung zur Durchführung eines solchen Verfahrens erfolgt die Lösung dieser Aufgabe dadurch, daß oberhalb des Querspritzkopfes eine induktive Heizvorrichtung für die mit den Schläuchen zu umspritzenden und dem Querspritzkopf von oben zuzuführenden Dornen angeordnet ist.

Weitere zweckmäßige Ausgestaltungen sind in den Unteransprüchen genannt.

Die mit der Erfindung erzielten Vorteile beruhen auf folgender Funktionsweise : Bei der Verwendung eines Querspritzkopfes verläßt die Kautschukmischung die Düse des Extruders mit einer Austrittstemperatur, die im allgemeinen zwischen 80 und 120 °C liegt. Bei Verwendung eines sogenannten « Scherspritzkopfes » erfährt die Kautschukmischung eine zusätzliche Temperaturerhöhung, so daß im Scherspalt Austrittstemperaturen bis zu 160 °C erreicht werden können, die nahe bei der Vulkanisationstemperatur der Kautschukmischung liegen. Durch die senkrechte Führung der Dorne wird darüber hinaus vermieden, daß bei weichen Kautschukmischungen kein Abhängen der Schläuche von den Dornen erfolgt.

Dem Querspritzkopf werden die zu umspritzenden Dorne von oben zugeführt. Dabei passieren die Dorne während des Einführ-Vorganges eine Induktionsspule, die sie in sehr kurzer Zeit auf gleichmäßige Temperaturen von etwa 150 °C bis 200 °C aufheizt. Die über die induktiv zugeführte Energie einzustellende Temperatur richtet sich dabei nach der Gummimischung, der Wandstärke des Schlauches sowie der Wärmekapazität des Dornes.

Der induktiv erwärmte und auf der angegebenen Temperatur befindliche Dorn wird im Querspritzkopf von der Kautschukmischung umspritzt, so daß er seine gespeicherte Wärme nur durch Wärmedurchgang durch die Kautschukschicht abführen kann, d. h., während des folgenden Abkühlvorganges muß die gesamte, im Metalldorn gespeicherte Energie über die Kautschukmischung abfließen und dadurch den Kautschuk zu Gummi vulkanisieren.

Den Abkühlvorgang kann man dadurch verzögern, daß man den umspritzten Dorn etwa 5 bis 10 Minuten lang durch eine Wärmekammer führt ; dadurch läßt sich im kontinuierlichen Betrieb eine vollständige Durchvulkanisation des Kautschuks zu einem Gummischlauch erreichen.

Nach Abschluß der Vulkanisationsphase wird der jetzt von vulkanisiertem Gummi ummantelte Dorn zur Abkühlung in ein Wasserbad getaucht, mit Kühlwasser besprüht oder mit Preßluft gekühlt. Dann wird der Schlauch abgezogen, so daß der Dorn in das Einführmagazin zurückgeführt werden kann.

Bei einer typischen Verweilzeit eines Dornes von etwa 10 Minuten im Vulkanisationsprozeß können somit pro Dorn und Stunde etwa sechs Schläuche erzeugt werden ; beim herkömmlichen, diskontinuierlichen Verfahren können nur etwa 1 bis 2 Schläuche pro Dorn und Stunde gefertigt werden. Dies heißt also, daß der « Dorn-Park » auf etwa 1/6 des bisher notwendigen Bestandes verringert werden kann.

Über die sehr rasch reagierende, induktive Heizung läßt sich die Vulkanisations-Temperatur und damit die Vulkanisationszeit sehr genau den durch die Mischung und die Wandstärke des Gummischlauches vorgegebenen Werten anpassen.

Ein weiterer Vorteil ist der geringere Energieverbrauch, da nur der Kautschuk bzw. Gummi und der Dorn aufgeheizt werden müssen, nicht aber Autoklaven, Rahmengestelle und ähnliche Vorrichtungen mit großer Wärmekapazität.

Die Wärmekammer befindet sich im wesentlichen immer auf der gleichen Temperatur, so daß hier keine ständige Aufheizung und Abkühlung erforderlich ist.

Weiterhin kann, wie auch bei anderen kontinuierlichen Vulkanisationsverfahren, die durch Friktion im Extruder erzeugte Wärme vollständig ausgenutzt werden. Bei den herkömmlichen diskontinuierlichen Verfahren ist dies nicht der Fall, da zunächst der Kautschuk heiß extrudiert, dann abgekühlt und anschließend wieder erwärmt werden muß. Bei der erfindungsgemäßen Vorrichtung wird also die dem Kautschuk zugeführte Wärmeenergie für den Vulkanisationsprozeß genutzt.

Zweckmäßigerweise ist unter der Austrittsöffnung des Querspritzkopfes eine Fördereinrichtung, beispielsweise ein umlaufendes endloses Förderband, vorgesehen, das die umspritzten Dorne durch die Wäremkammer transportiert.

Die Dorne mit dem Gummimantel sollten senkrecht auf dem Förderband gehalten werden, damit der in diesem Zustand noch relativ empfindliche Gummi nicht auf einer Unterlage aufliegt und dadurch vielleicht verformt werden kann. Zu diesem Zweck werden hohle Dorne verwendet, die auf entsprechende, an der Oberfläche des Förderbandes befestigte Vorsprünge aufgesteckt werden und dadurch die Dorne und damit auch den Gummimantel in einer senkrechten Lage haltern.

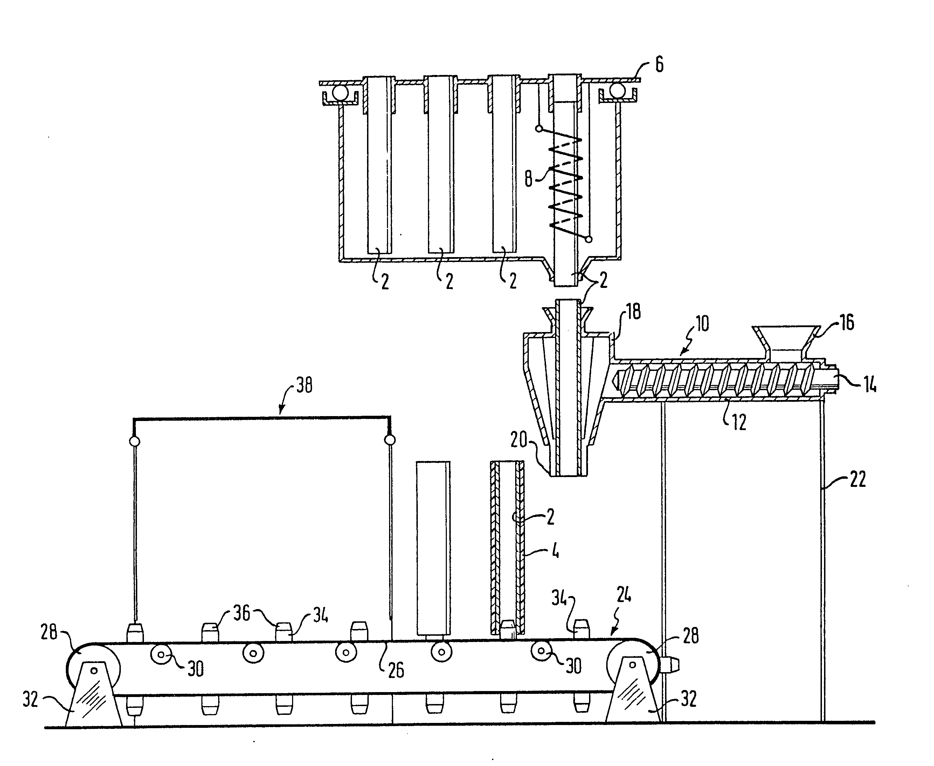

Die Erfindung wird im folgenden anhand eines Ausführungsbeispiels unter Bezugnahme auf die beiliegende, schematische Zeichnung näher erläutert, deren einzige Figur das Prinzip der erfindungsgemäßen Vorrichtung zeigt.

Diese Vorrichtung weist eine als Einführ-Magazin dienende Hängevorrichtung 6 auf, in der hohle Metalldorne 2 an ihrem oberen Ende gehalten in eine Induktions-Heizeinrichtung 8 eingeführt werden, die schematisch durch die entsprechende Spule angedeutet ist. Diese Spule 8 umgibt den Dorn wendelförmig, wodurch der Dorn 2 induktiv aufgeheizt werden kann. Wie man in der Figur erkennen kann, ist die Hängevorrichtung 6 verschiebbar, um die einzelnen Dorne 2 der Induktionsheizeinrichtung 8 zuzuführen.

Die Induktionsheizeinrichtung 8 mit dem aufgeheizten Dorn 2 ist genau senkrecht über einem Querspritzkopf 18 eines Extruders 10 angeordnet. Dieser Extruder 10 ist auf einem Ständer 22 angebracht und weist das übliche Gehäuse 12, eine Schnecke 14 und einen Einfülltrichter 16 für die Gummimischung auf. Die Schnecke 14 bringt die Gummimischung zu dem Querspritzkopf 18, dem senkrecht von oben der aufgeheizte Dorn 2 zugeführt wird. Dieser Dorn 2 bewegt sich senkrecht von oben nach unten durch den Querspritzkopf 18 und wird dabei von der geheizten Kautschukmischung umspritzt.

Aus der Austrittsöffnung des Querspritzkopfes 18 tritt also senkrecht nach unten ein umspritzter Metalldorn 2 aus.

An der Austrittsöffnung des Querspritzdorns 18 befindet sich eine nur schematisch angedeutete Abschneidevorrichtung 20, die den anvulkanisierten Kautschukmantel am Anfang und am Ende jedes Dorns abschneidet.

Der umspritzte Dorn 2 gelangt nach unten auf ein endloses, umlaufendes Förderband 26, das auf seiner Oberfläche mit Vorsprüngen 34 mit kegelstumpfförmiger Spitze 36 versehen ist. Der Außendurchmesser des Vorsprungs 34 entspricht dem Innendurchmesser der hohlen Metalldorne 2, so daß die Metalldorne 2 mit dem Gummimantel 4 auf die Vorsprünge 34 aufgesteckt und dadurch in senkrechter Lage auf dem Förderband 26 gehalten werden können, wie in der Figur angedeutet ist.

Das Förderband 26 ist über mehrere Stützrollen 30 geführt und verläuft an seinem Anfang bzw. an seinem Ende über Antriebsrollen 28, die durch Ständer 32 gehalten werden.

Das Förderband 26 transportiert die einzelnen, mit dem Gummimantel 4 umspritzten Metalldorne 2 durch eine Wärmekammer, die auf einer gleichmäßigen Temperatur gehalten ist.

Beim Verlassen der Wärmekammer ist die Gummischicht vollständig ausvulkanisiert, so daß der nunmehr mit vulkanisiertem Gummi ummantelte Dorn zur Abkühlung in ein Wasserbad getaucht, mit Kühlwasser besprüht oder mit Preßluft gekühlt werden kann (nicht dargestellt). Anschließend wird der Schlauch abgezogen, so daß der Dorn wieder dem Einführmagazin, nämlich der Hängevorrichtung 6, zugeführt werden kann.

Wesentlich ist hierbei, daß der Dorn die durch Induktionsheizung zugeführte Wärmeenergie nur über den Wärmedurchgang durch die Gummischicht abführen kann, d. h., die gesamte, im Metalldorn gespeicherte Energie muß über den Gummi abfließen, so daß diese Wärmeenergie zur Vulkanisation des Gummis ausgenutzt wird.

Zusätzlich wird noch die durch Friktion im Extruder erzeugte Wärmeenergie vollständig für die Vulkanisation ausgenutzt, so daß sich insgesamt ein extrem geringer Energieverbrauch ergibt.

Die Wärmekammer 38 dient nicht- zur Aufheizung des Gummis, sondern nur zur Verzögerung der Abkühlung, so daß der Wärmeverbrauch dieser Wärmekammer ebenfalls nicht sonderlich hoch ist.

## Ansprüche

1. Verfahren zur Herstellung von dorngeheizten Schläuchen (4) aus einer vulkanisierbaren Kautschukmischung,

a) bei dem die Dorne (2) dem Querspritzkopf (18) eines Extruders (10) in senkrechter Lage von oben zugeführt,

b) mit dem Extrudat umspritzt werden und

c) nach Aufspritzen des Schlauches nach unten aus dem Querspritzkopf (18) austreten, und

d) bei dem der hergestellte Schlauch in einzelne Schlauchstücke zerschnitten wird, dadurch gekennzeichnet, daß

e) die Dorne (2) vor der Umspritzung mindestens auf die Vulkanisationstemperatur der Kautschukmischung aufgeheizt werden.

2. Verfahren nach Anspruch 1, dadurch gekennzeichnet, daß die Dorne (2) induktiv aufgeheizt werden.

3. Verfahren nach einem der Ansprüche 1 oder 2, dadurch gekennzeichnet, daß die Dorne (2) mit den aufgespritzten Schläuchen (4) in einer Wärmekammer (38) nachtemperiert werden.

4. Vorrichtung zur Durchführung des Verfahrens nach einem der Ansprüche 1 bis 3

a) mit dem Querspritzkopf (18) eines Extruders (10), dem die Dorne (2) in senkrechter Lage von oben zugeführt werden und aus dem die Dorne nach Aufspritzen des Schlauches (4) nach unten austreten, und

b) mit einer den hergestellten Schlauch in einzelne Schlauchstücke zertrennenden Abschneidevorrichtung (29), dadurch gekennzeichnet, daß

c) oberhalb des Querspritzkopfes (18) eine induktive Heizvorrichtung (8) für die Dorne (2) angeordnet ist.

5. Vorrichtung nach Anspruch 4, dadurch gekennzeichnet, daß unterhalb des Querspritzkopfes (18) eine Fördereinrichtung (24) mit Vorrichtungen (34) zur senkrechten Halterung der aus dem Querspritzkopf (18) nach unten austretenden Dorne (2) angeordnet ist.

6. Vorrichtung nach Anspruch 5, dadurch gekennzeichnet, daß die Fördereinrichtung (24) aus einem endlossen Transportband (26) besteht, das Vorsprünge (34) mit kegelstumpfförmiger Spitze (36) zur Fixierung der hohlen Dorne (2) aufweist.

7. Vorrichtung nach mindestens einem der Ansprüche 4 bis 6, dadurch gekennzeichnet, daß dem Querspritzkopf (18) eine mit diesem über das Transportband (26) in Verbindung stehende Wärmekammer (38) nachgeschaltet ist.

## Claims

1. A process for the production of mandrel-heated tubes (4) from a vulcanisable rubber mixture,

a) in which the mandrels (2) are supplied in a vertical position to the crosshead of an extruder from above,

b) are extrusion-coated with the extruded material and

c) emerge downwards from the crosshead (18) after the tube has been coated on, and

d) in which the tube which is produced is cut into individual sections of tube, characterised in that

e) mandrels (2) are heated to at least the vulcanisation temperature of the rubber mixture before being extrusion-coated.

2. A process according to claim 1, characterised in that the mandrels (2) are inductively heated.

3. A process according to one of claims 1 or 2, characterised in that the mandrels (2) are subsequently tempered in a heating chamber (8) with the tubes (4) which have been coated on.

4. An apparatus for carrying out the process according to one of claims 1 to 3,

a) having the crosshead (18) of an extruder (10) to which the mandrels (2) are supplied from above in a vertical position and from which the mandrels emerge downwards after the tube (4) has been coated on, and

b) a cutting device (29) which separates the tube which has been produced into individual sections of tube, characterised in that

c) an inductive heating device (8) for the mandrels (2) is arranged above the crosshead (18).

5. An apparatus according to claim 4, characterised in that a conveying device (24) having devices (34) for vertically supporting the mandrels (2) emerging downwards from the crosshead (18) is arranged below the crosshead (18).

6. An apparatus according to claim 5, characterised in that the conveying device (24) comprises a continuous conveyor belt (26) having projections (34) with frusto-conical tips (36) for fixing the hollow mandrels.

7. An apparatus according to at least one of claims 4 to 6, characterised in that a heating chamber (38) which is connected to the crosshead (18) via the conveyor belt (26) follows the crosshead (18).

## Revendications

1. Procédé de fabrication de tubes souples (4) en un mélange de caoutchouc vulcanisable, et chauffés sur mandrin, qui consiste :

a) à amener les mandrins (2) par le haut en position verticale à la tête en équerre (18) d'une extrudeuse (10),

b) à les recouvrir par injection du produit d'extrusion, et

c) après que le tube souple a été appliqué par injection, à les sortir de la tête en équerre (18) par le bas, et

d) à découper le tube souple fabriqué en tronçons de tube souple individuels, caractérisé en ce qu'il consiste .

e) à chauffer les mandrins (2), avant le recouvrement par injection, à la température de vulcanisation du mélange de caoutchouc.

2. Procédé suivant la revendication 1, caractérisé en ce qu'il consiste à chauffer les mandrins (2) par induction.

3. Procédé suivant l'une des revendications 1 ou 2, caractérisé en ce qu'il consiste à modérer ensuite la température des mandrins (2) avec les tubes souples (4) appliqués par injection, dans une chambre isotherme (38).

4. Dispositif pour la mise en œuvre du procédé suivant l'une des revendications 1 à 3, comprenant :

a) la tête en équerre (18) d'une extrudeuse (10) à laquelle les mandrins (2) sont amenés, par le haut, en position verticale, et de laquelle les mandrins sortent vers le bas, après application par injection du tube souple (4) ; et

b) un dispositif de tronçonnage (29) tronçonnant le tube souple fabriqué en tronçons de tubes souples individuels, caractérisé en ce que

c) au-dessus de la tête en équerre (18) est prévu un dispositif de chauffage (8) par induction pour les mandrins (2).

5. Dispositif suivant la revendication 4, caractérisé en ce que, en dessous de la tête en équerre (18), est disposé un transporteur (24) ayant des dispositifs (34) pour maintenir verticalement les mandrins (2) sortant par le bas de la tête en équerre (18).

6. Dispositif suivant la revendication 5, caractérisé en ce que le transporteur (24) est constitué d'une bande transporteuse sans fin (26) qui présente des parties en saillie (34) à sommet (36) en forme de tronc-de-cône pour la fixation des mandrins (2) creux.

7. Dispositif suivant l'une au moins des revendications 4 à 6, caractérisé en ce qu'en aval de la tête en équerre (18) est montée une chambre isotherme communiquant avec celle-ci par la bande transporteuse (26).